# FASCICULE DE BREVET EUROPEEN

(11) **EP 2 567 541 B1**
(45) Date de publication et mention de la délivrance du brevet: **25.12.2019**
(21) Numéro de dépôt: 11718716.1
(22) Date de dépôt: 04.05.2011
(51) Int. Cl.: H04N 5/374, H04N 5/363

(54) **CAPTEUR D'IMAGE À MATRICE D'ÉCHANTILLONNEURS**
BILDSENSOR MIT ABTASTANORDNUNG
IMAGE SENSOR HAVING A SAMPLER ARRAY

(30) Priorité: 04.05.2010 FR 1001911
(43) Date de publication de la demande: 13.03.2013
(73) Titulaire: Teledyne e2v Semiconductors SAS, 38120 Saint-Egrève (FR)
(72) Inventeur: BUGNET, Henri, F-38430 Moirans (FR); TATAT, Alexandre, 63000 Clermont-Ferrand (FR)
(74) Mandataire: Desvignes, Agnès
(86) Numéro de dépôt international: PCT/EP2011/057152
(87) Numéro de publication internationale: WO 2011/138374

(56) Documents cités:
- WO-A1-01/26382
- WO-A1-99/60777
- FR-A1- 2 906 080
- US-A1- 2008 079 830

## Description

L'invention concerne les capteurs d'image, tout particulièrement mais non exclusivement les capteurs à défilement et intégration de signal (ou capteurs TDI, de l'anglais : "Time Delay Integration" Linear Sensors"), dans lesquels une image d'une ligne de points d'une scène observée est reconstituée par addition d'images successives prises par plusieurs lignes photosensibles observant successivement une même ligne de la scène au fur et à mesure que la scène défile devant le capteur perpendiculairement aux lignes.

Ces capteurs sont utilisés par exemple dans des systèmes d'observation de la terre par satellite. Ils comprennent plusieurs lignes parallèles de pixels photosensibles ; le séquencement des circuits de commande des différentes lignes (contrôle de temps d'exposition puis de lecture des charges photogénérées) est synchronisé par rapport au défilement relatif de la scène et du capteur, de manière que toutes les lignes du capteur voient une seule ligne de la scène observée. Les signaux générés sont ensuite additionnés point à point pour chaque point de la ligne observée.

Le rapport signal/bruit théorique est amélioré dans le rapport de la racine carrée du nombre N de lignes du capteur. Ce nombre peut aller de quelques lignes à une centaine selon les applications (contrôle industriel, observation terrestre, radiographie panoramique dentaire ou mammographie).

Dans les capteurs d'image à transfert de charges (capteurs CCD), l'addition des signaux point par point se faisait naturellement et sans bruit de lecture en vidant dans une ligne de pixels les charges générées par la ligne précédente, en synchronisme avec le déplacement relatif de la scène et du capteur. WO 01/26382 A1 divulgue un capteur d'image C-MOS à défilement et intégration de signal ("Time Delay Integration", TDI) avec une lecture de signal par double échantillonage corrélé ("Correlated Double Sampling", CDS).

Dans la demande de brevet WO2008034794 (ou FR2906080), on a proposé un capteur d'image en technologie CMOS, à pixels actifs, fonctionnant en mode TDI. Il n'y a pas de transfert de charge de ligne à ligne puisque les pixels actifs ne fonctionnent pas par transfert de charge mais fournissent une tension sur un conducteur de colonne. Pour faire l'addition des signaux correspondant à une même ligne d'image vue par les différentes lignes de pixels, on utilisait une conversion analogique-numérique pour fournir une représentation numérique de la sortie de chaque pixel et on additionnait N valeurs numériques issues de N pixels qui avaient successivement vus le point d'image au cours du défilement. Toutefois, le principe décrit dans cette demande ne permettait pas de faire une lecture de signal par double échantillonnage corrélé véritable mais seulement par un pseudo double échantillonnage corrélé amenant un bruit de type kTC qui limite les possibilités de détection en faible éclairement.

L'invention a pour but de corriger ce défaut en permettant une lecture avec un vrai double échantillonnage corrélé tout en autorisant un temps d'intégration commun pour toutes les lignes. Pour cela, on prévoit que si le capteur comporte N lignes de P pixels lues par adressage successif de chaque ligne, alors l'échantillonnage des signaux analogiques issus de ces pixels est effectué par une matrice auxiliaire de N lignes de P circuits de traitement individuels comprenant chacun un circuit d'échantillonnage respectif ; les P circuits de traitement d'une ligne reçoivent comme entrées chacun un des P conducteurs de colonne, pour pouvoir échantillonner ligne par ligne les signaux issus des pixels. Des niveaux de potentiels de réinitialisation sont placés successivement ligne par ligne sur tous les conducteurs de colonne et échantillonnés ligne par ligne dans les NxP circuits d'échantillonnage ; puis les signaux utiles, référencés par rapport aux niveaux de potentiel de réinitialisation de chaque pixel, sont placés ligne par ligne sur les conducteurs de colonne et échantillonnés ligne par ligne. La conversion analogique-numérique des signaux échantillonnés et la sommation numérique des signaux convertis peuvent être effectués par les circuits de traitement individuels.

De plus, ce type d'organisation permet de réaliser un capteur d'image matriciel instantanée (c'est-à-dire sans défilement et intégration de charges, donc sans sommation) ayant la propriété de pouvoir fonctionner à la fois avec un temps d'intégration commun à toutes les lignes et avec un véritable double échantillonnage corrélé minimisant le bruit de commutation corrélé.

Par conséquent, comme revendiquée dans la revendication 1 , on propose ici un capteur d'image à défilement et intégration de signal à N lignes de P pixels photosensibles, un pixel de rang j dans une ligne étant constitué par un circuit à transistors MOS comportant une entrée de sélection de ligne reliée à un conducteur d'adressage en ligne commun aux pixels de la ligne et une sortie reliée à un conducteur de colonne de rang j commun aux N pixels de même rang j appartenant aux différentes lignes, le capteur comportant un circuit d'adressage successif de chacune des N lignes de pixels pour appliquer à chaque fois aux conducteurs de colonne P d'une part P potentiels de réinitialisation et d'autre part P signaux analogiques correspondant à l'intégration de charges, pendant une même période d'intégration T, dans les P pixels de la ligne adressée, et le capteur comprenant encore des circuits de numérisation de signal en dehors de la matrice de pixels, caractérisé en ce que les circuits de numérisation comportent :
- N lignes de P circuits de traitement, chaque circuit de traitement de rang i en ligne et de rang j en colonne comprenant un échantillonneur respectif pour effectuer un double échantillonnage corrélé des signaux présents sur un conducteur de colonne de rang j et correspondant à l'observation d'un point d'image pendant la même durée d'intégration pour toutes les lignes, et
- un moyen de conversion analogique-numérique pour fournir des valeurs numériques des signaux analogiques échantillonnés,
- un moyen d'addition numérique pour additionner un signal converti par le circuit de traitement de rang i en ligne et j en colonne et correspondant à une période d'intégration T avec des signaux numériques convertis par les circuits de traitement de rangs précédents en ligne et correspondant à l'observation du même point d'image pendant des périodes d'intégration précédentes,
et un moyen d'extraction du contenu du moyen d'addition numérique de la dernière ligne à la fin de chaque période d'intégration.

L'échantillonneur est agencé pour faire un double échantillonnage corrélé comprenant l'échantillonnage d'un potentiel de réinitialisation correspondant au potentiel d'un nœud de stockage du pixel après réinitialisation et l'échantillonnage d'un potentiel utile correspondant au potentiel du nœud de stockage après déversement de charges dans le nœud de stockage, dans lequel le potentiel de réinitialisation correspond à un vidage de charges du nœud de stockage et le niveau de signal utile correspond à un remplissage de charges dans le nœud de stockage postérieurement à ce vidage. L'échantillonneur faisant partie d'un circuit de traitement comprend alors de préférence des moyens pour stocker d'abord un niveau de potentiel de réinitialisation à la suite d'une impulsion de réinitialisation appliquée au transistor de réinitialisation d'un pixel, puis un niveau de signal à la suite d'une impulsion de transfert appliquée au transistor de transfert ; le moyen de conversion analogique-numérique convertit alors la différence entre ces deux niveaux. L'impulsion de réinitialisation et l'impulsion de transfert sont communes à tous les pixels des N lignes.

Chaque pixel est un pixel actif en technologie MOS et comprend une photodiode, un nœud de stockage de charges, un transistor de transfert pour permettre le transfert de charges de la photodiode vers le nœud de stockage, un transistor de réinitialisation du potentiel du nœud de stockage, un transistor suiveur pour engendrer un potentiel représentant la quantité de charges dans le nœud de stockage, et un transistor de sélection de ligne pour relier le transistor suiveur au conducteur de colonne.

Le capteur comporte des moyens pour émettre un signal de réinitialisation commun (RST) pour la mise en conduction simultanée de tous les transistors de réinitialisation de la matrice, des moyens pour émettre un signal de transfert commun (GTRA) pour la mise en conduction simultanée de tous les transistors de transfert de la matrice, des moyens pour commander successivement pour chacune des lignes l'échantillonnage d'un potentiel de réinitialisation après une commande de réinitialisation commune et avant une commande de transfert commune, puis pour commander successivement pour chacune des lignes l'échantillonnage d'un potentiel utile après la commande de transfert.

Le moyen d'addition numérique d'un circuit de traitement de rang i en ligne et j en colonne est relié à une sortie d'un circuit de traitement de rang précédent i-1 en ligne pour en recevoir le résultat d'une addition numérique effectuée lors d'une intégration précédente ; le moyen d'addition numérique est apte à additionner à ce résultat une valeur numérique résultant d'une conversion analogique-numérique courante.

Le moyen de conversion analogique-numérique et le moyen pour additionner les valeurs numériques sont de préférence répartis dans les différents circuits de traitement, et le capteur comporte alors un circuit de sortie pour extraire de l'une au moins des N lignes de P circuits de traitement le résultat des additions effectuées dans chacun des pixels de cette ligne.

Physiquement, le capteur comporte une juxtaposition d'une matrice de pixels photosensibles avec quatre transistors par pixel, et une matrice de circuits de traitement située en dehors de la matrice de pixels.

Dans une réalisation, préférée, le même circuit d'adressage de ligne peut servir à la fois à l'adressage des lignes de pixels et à l'adressage des circuits de traitement pour permettre l'échantillonnage des signaux issus d'une ligne de pixels de rang i toujours dans la ligne de circuits de traitement de rang i. Dans ce cas, le résultat des additions est extrait systématiquement de la dernière ligne de circuits de traitement.

Le moyen de conversion analogique-numérique est de préférence un convertisseur à rampe comprenant un comparateur et un compteur dans chaque circuit de traitement, le compteur comptant à une cadence fixe jusqu'au basculement du comparateur lors de l'application d'une rampe de tension linéaire sur une entrée du comparateur. Le compteur s'incrémente en proportion du signal échantillonné à convertir. Le moyen d'addition numérique est alors une entrée d'initialisation du compteur apte à initialiser le compteur à une valeur fournie par le circuit de traitement de rang précédent.

La sortie du compteur d'un circuit auxiliaire de rang i en ligne et de rang j en colonne est alors reliée à une entrée du compteur d'un circuit de traitement de rang i+1 en ligne et j en colonne pour placer dans ce dernier, avant une conversion analogique-numérique correspondant à une période d'intégration, un résultat correspondant à la ligne de rang i et à une période d'intégration précédente.

Le compteur d'un circuit de numérisation de rang j en colonne et de rang i en ligne comporte une entrée d'initialisation reliée à la sortie du compteur de même rang en colonne et de rang précédent en ligne, pour initialiser le compteur de rang j en colonne et i en ligne avec le résultat contenu dans le compteur de même rang en colonne et de rang précédent i-1 en ligne avant le début d'une conversion analogique-numérique. Il en résulte que le contenu du compteur du circuit de rang i à la fin de la rampe correspond à l'addition de la quantité de lumière reçue par un pixel et du contenu précédent fourni par le compteur de rang i-1, lequel est lui-même issu d'une addition précédente et ainsi de suite.

Les publications de brevet US2008/0079830 et WO 01/026382 décrivent des capteurs TDI à sommation analogique de charges.

D'autres caractéristiques et avantages de l'invention apparaîtront à la lecture de la description détaillée qui suit et qui est faite en référence aux dessins annexés dans lesquels :
- la figure 1 représente l'architecture générale du capteur selon l'invention ;
- la figure 2 représente un schéma de pixel CMOS à quatre transistors ;
- la figure 3 représente un chronogramme de fonctionnement du capteur ;
- la figure 4 représente la structure de principe d'un circuit de traitement de rang i,j ;
- la figure 5 représente la structure globale de connexion des circuits de traitement d'une même colonne dans le cas où ces circuits sont connectés entre eux pour additionner le résultat de la ligne précédente à une nouvelle conversion analogique-numérique.

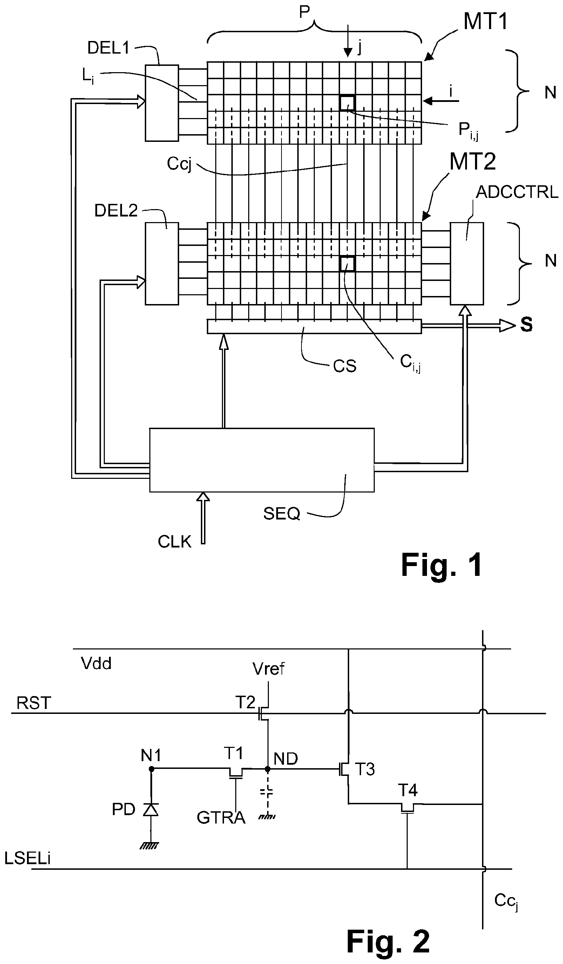

Sur la figure 1, on voit l'architecture générale d'un capteur d'image numérique à défilement et intégration de charges selon l'invention. Le capteur comporte une matrice MT1 de N lignes de P pixels sensibles à la lumière. Chacune des N lignes voit successivement une même ligne d'image au cours du défilement de l'image par rapport au capteur, et les signaux des N lignes sont additionnés en synchronisme, pixel par pixel. Les pixels sont des pixels de type CMOS comprenant en général chacun une photodiode et quelques transistors. Les pixels d'une même ligne de rang i (i=1 à N) sont reliés à un même conducteur de ligne Lᵢ qui permet d'adresser simultanément tous les pixels de la ligne. Les pixels d'une colonne de rang j (j=1 à P) sont tous reliés à un même conducteur de colonne Ccj. Lorsque la ligne Lᵢ est adressée, chaque pixel P_{i,j} de cette ligne est relié au conducteur de colonne correspondant Ccⱼ pour lui appliquer un signal analogique représentant l'éclairement du pixel P_{i,j} pendant un temps d'intégration donné T. Les conducteurs de ligne Lᵢ reçoivent à cet effet des signaux d'adressage d'un décodeur de ligne DEL1. Les conducteurs de colonne Ccj constituent des conducteurs de sortie de la matrice de pixels MT1.

Une deuxième matrice MT2 de M lignes de P circuits de traitement est associée à la matrice de pixels MT1 et a pour entrées les conducteurs de colonne Ccⱼ. Chaque circuit de traitement C_{i,j} de rang i en ligne et j en colonne comporte un échantillonneur-bloqueur élémentaire. Les échantillonneurs-bloqueurs sont reliés aux conducteurs de colonne Ccⱼ pour en recevoir des signaux analogiques à échantillonner. Les échantillonneurs-bloqueurs sont adressés en ligne par des conducteurs de ligne issus d'un décodeur de ligne DEL2 et ce sont les échantillonneurs-bloqueurs de la ligne adressée et eux seuls qui reçoivent les signaux analogiques présents sur les conducteurs de colonne. Comme on le verra, le décodeur DEL2 peut être confondu dans certains cas avec le décodeur DEL1 ; mais les décodeurs sont distincts dans le cas où la ligne d'échantillonneurs doit recevoir des niveaux de potentiel qui proviennent à chaque nouvelle période d'intégration d'une ligne de pixels différente.

De préférence, les cellules C_{i,j} comprennent chacune non seulement un échantillonneur-bloqueur respectif mais aussi un convertisseur analogique-numérique élémentaire et un moyen de sommation élémentaire.

Un circuit de sortie CS comprenant P cellules de sortie (autant que de colonnes) permet d'extraire de la matrice MT2 des signaux numériques qui sont les résultats de plusieurs additions de signaux élémentaires obtenus par observations successives d'une même ligne d'image par plusieurs lignes de la matrice MT1. Les résultats pour cette ligne d'image, extraits de la matrice MT2, peuvent être lus sur une sortie S. La sortie est faite par exemple en mode série, les P cellules fournissant chacune successivement un signal numérique sur la sortie S ; les résultats pour la ligne d'image suivante sont extraits périodiquement après un temps T égal à la durée d'intégration.

Les fonctions d'échantillonnage et de conversion analogique-numérique de la ligne adressée dans la matrice MT2 sont contrôlées par un circuit de contrôle ADCCTRL. Le séquencement général du fonctionnement du capteur est assuré par un circuit de séquencement SEQ.

Deux types de séquencement général peuvent être prévus pour effectuer l'accumulation numérique des signaux d'une même ligne d'image vue successivement par les N lignes de pixels de la matrice MT1. L'un des séquencements utilise une permutation circulaire pour la transmission de signaux analogiques d'une ligne de la matrice MT1 vers une ligne de la matrice MT2 et une permutation circulaire de la transmission d'une ligne de la matrice MT2 vers le circuit de sortie CS. L'autre, préféré, n'utilise pas de permutation circulaire. Lorsqu'il y a un séquencement avec permutation circulaire, un décodeur DEL2 est nécessaire pour adresser les lignes de la matrice MT2 différemment de l'adressage des lignes de la matrice MT1 et pour désigner une ligne parmi N en permutation circulaire pour extraire son contenu vers le circuit de sortie CS.

On va décrire en détail le séquencement préféré, sans permutation.

Une ligne d'image est vue par la première ligne de pixels (rang i=1) pendant une durée d'intégration T. Le contenu analogique de cette ligne est transféré dans la première ligne (rang i=1) de la matrice MT2, échantillonné et converti en numérique, et stocké dans cette ligne.

Puis après défilement d'un incrément de distance correspondant à la durée T, cette même ligne d'image est vue par la deuxième ligne (i=2) de la matrice MT1. Cette deuxième ligne est transférée dans la deuxième ligne de la matrice MT2, échantillonnée, convertie, et additionnée au contenu précédemment stocké dans la première ligne (i=1). Pendant ce temps, la première ligne de pixels de la matrice MT1 voit une deuxième ligne d'image et le contenu de cette première ligne est à nouveau transféré dans la première ligne de la matrice MT2.

Et ainsi de suite, chaque ligne de rang i de la matrice de pixels est transférée à chaque nouvelle période d'intégration dans la ligne de même rang i de la matrice MT2 ; elle est échantillonnée, convertie, et additionnée au contenu précédent de la ligne de rang i-1.

A la fin de la N^{ième} période d'intégration, c'est-à-dire au bout du temps NxT, la dernière ligne de la matrice, de rang N, contient l'addition des signaux correspondant à la première ligne d'image vue par les N lignes de la matrice MT1.

Le circuit de sortie extrait le contenu de la N^{ième} ligne de la matrice MT2 et remet à zéro ce contenu.

A la fin de la (N+1)^{ième} période, la dernière ligne de la matrice MT2 contient l'addition des signaux correspondant à la deuxième ligne d'image vue par les N lignes de la matrice. Ce contenu est extrait et remis à zéro, etc.

Il n'y a donc pas de permutation circulaire de l'adressage pour le stockage dans la matrice MT2 : le transfert se fait toujours de la ligne i de la matrice MT1 vers la ligne i de la matrice MT2 ; et pas de permutation circulaire pour l'extraction des signaux de la matrice MT2 : l'extraction se fait toujours de la ligne N ; en contrepartie de cette simplification d'adressage il y a la nécessité de transférer systématiquement dans une ligne de rang quelconque i de la matrice MT2 le contenu précédemment stocké dans la ligne de rang i-1. Ce transfert se fait avec une période égale à la durée d'intégration T. Il y a lieu avant chaque nouvelle conversion analogique-numérique et on additionne le contenu transféré (résultant de la période d'intégration précédente) avec le résultat de la conversion analogique-numérique courante.

### Chronogramme des signaux d'échantillonnage :

Quel que soit le type de séquencement de l'accumulation de signaux numériques de N lignes de la matrice de pixels, on peut utiliser grâce à l'invention un pixel CMOS à quatre ou cinq transistors fonctionnant avec un temps d'intégration qui commence au même instant pour toutes les lignes de pixels et qui se termine également au même instant pour toutes les lignes. De plus, le chronogramme qu'on va détailler permet de réaliser un double échantillonnage corrélé véritable.

On rappelle que le double échantillonnage consiste à échantillonner séparément un niveau de réinitialisation et un niveau de signal utile. Le véritable double échantillonnage corrélé consiste à réinitialiser le potentiel d'un noeud de stockage de charges (dans le pixel) puis à échantillonner le niveau de réinitialisation, puis à transférer dans le noeud de stockage les charges intégrées par une photodiode pendant une durée d'intégration T, puis à échantillonner le niveau de signal utile qui en résulte, et enfin à faire la différence entre les deux signaux échantillonnés. Le pseudo double échantillonnage corrélé consisterait à transférer d'abord dans le noeud de stockage les charges intégrées pendant la durée T, puis à échantillonner le niveau de signal utile, puis à réinitialiser le noeud de stockage, puis à échantillonner le niveau de réinitialisation, et enfin à faire la différence entre les deux signaux échantillonnés. Mais dans le deuxième cas, la comparaison utilise le niveau de réinitialisation qui servira pour la période d'intégration suivante, pas celui de la période en cours et c'est pourquoi il ne s'agit pas d'un véritable double échantillonnage corrélé. Bien que ce soit en principe le même niveau de réinitialisation à chaque période, il y a un bruit de commutation de type kTC qui est dû au transistor de réinitialisation, bruit qu'on n'élimine pas avec le pseudo double échantillonnage corrélé.

Il est important de remarquer que les matrices usuelles de pixels à quatre ou cinq transistors permettent un double échantillonnage corrélé véritable, mais seulement à la condition de fonctionner en mode dit « rolling shutter », c'est-à-dire un mode dans lequel les temps d'intégration sont échelonnés sur les différentes lignes et non pas communs à toutes les lignes. Les pixels à cinq transistors permettent usuellement d'avoir un temps d'intégration commun à toutes les lignes ; cependant, dans ce cas ils ne permettent pas de faire un double échantillonnage corrélé véritable mais seulement un pseudo double échantillonnage corrélé. Selon l'invention on peut fonctionner avec quatre transistors (un cinquième transistor facultatif peut être prévu pour limiter le temps d'exposition) à la fois avec un temps d'intégration commun à toutes les lignes et un véritable double échantillonnage corrélé.

La figure 2 représente la structure d'un pixel actif de technologie CMOS à quatre transistors T1 à T4 et une photodiode PD ; le noeud N1 représente la cathode de la photodiode ; il recueille les charges générées par la lumière dans la photodiode ; un transistor de transfert T1 relie le noeud N1 à un noeud ND de stockage de charges ; le transistor T1 n'est rendu conducteur que pendant un bref instant par un signal de transfert GTRA qui permet de déverser de la photodiode vers le noeud ND les charges accumulées dans la photodiode après une durée d'intégration T. Le signal de transfert GTRA est commun à tous les pixels de la matrice.

Le noeud de stockage de charges ND peut être réinitialisé à un potentiel de référence Vref par un transistor de réinitialisation T2 pour vider les charges accumulées dans le noeud ND au cours d'une période d'intégration précédente et pour ramener en conséquence ce nœud à un potentiel de réinitialisation. A cet effet, le transistor T2 est rendu conducteur pendant une brève durée par un signal de réinitialisation RST commun à tous les pixels de la matrice.

Le noeud de stockage ND est par ailleurs relié à la grille d'un transistor suiveur T3 dont le drain est au potentiel de référence Vref (ou un autre potentiel fixe tel qu'une alimentation Vdd) et dont la source recopie (à une chute de tension grille-source près) le potentiel pris par la grille, c'est-à-dire le potentiel du noeud de stockage ND. La source du transistor suiveur T3 est reliée, par l'intermédiaire d'un transistor de sélection de ligne T4 à un conducteur de colonne Ccj commun à tous les pixels d'une colonne de rang j. Le transistor de sélection de ligne T4 est rendu conducteur par un signal LSELᵢ qui est un signal d'adressage de la ligne de rang i et qui est commun à tous les pixels de cette ligne. Il y a N signaux de sélection de ligne LSEL₁ à LSEL_{N}.

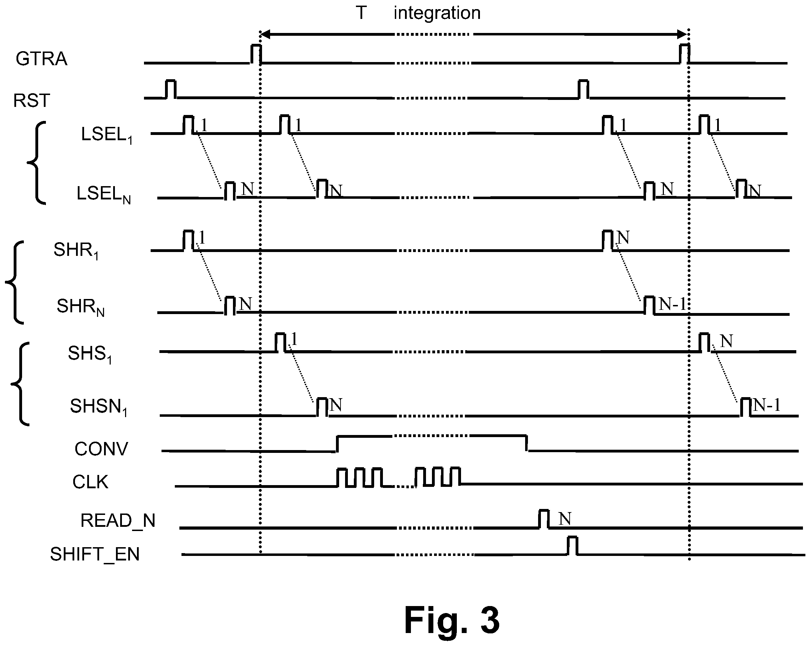

Le chronogramme utilisé dans l'invention est représenté à la figure 3.

Un bref signal de réinitialisation RST est émis. Il est commun à tous les pixels de la matrice. Il ramène les noeuds de stockage de tous les pixels à un niveau de potentiel de réinitialisation.

Puis on sélectionne la ligne 1 de la matrice de pixels MT1 et la ligne 1 de la matrice MT2 par le signal LSEL₁ ; les niveaux de réinitialisation des noeuds de stockage des pixels de la ligne 1 sont appliqués aux conducteurs de colonne qui relient la matrice MT1 à la matrice MT2 ; on échantillonne alors ces niveaux de réinitialisation dans les échantillonneurs-bloqueurs de la ligne 1 de la matrice MT2, à l'aide d'un signal d'échantillonnage SHR₁ commun à tous ces échantillonneurs-bloqueurs de la ligne 1.

Ensuite on sélectionne successivement toutes les lignes l'une après l'autre par des signaux LSEL₂ à LSEL_{N} et pendant la sélection d'une ligne on échantillonne à chaque fois les niveaux de réinitialisation correspondants dans la ligne correspondante de la matrice MT2. Ainsi, un premier signal d'échantillonnage SHRᵢ propre à la ligne i de la matrice MT2 permet d'échantillonner dans cette ligne de rang i les niveaux de réinitialisation issus des pixels de la ligne de même rang i de la matrice MT1, adressés par le signal de sélection LSELᵢ.

A la fin de cette séquence initiale, chaque échantillonneur-bloqueur de la matrice MT2 contient un niveau de réinitialisation d'un pixel respectif de la matrice MT1.

On applique alors à toute la matrice MT1 un bref signal de transfert GTRA qui définit la fin d'une durée d'intégration T (et le début de la période suivante). Les noeuds de stockage ND des pixels reçoivent des quantités de charges correspondant à leur éclairement respectif pendant la durée d'intégration précédente. Ces charges sont fournies par les photodiodes qui se vident complètement et sont prêtes pour une nouvelle durée d'intégration.

On sélectionne à nouveau successivement toutes les lignes l'une après l'autre, dans la matrice MT1 et en même temps dans la matrice MT2, par des signaux LSEL₁ à LSEL_{N} et on échantillonne à chaque fois les niveaux de signal utile correspondants. Un deuxième signal d'échantillonnage SHSᵢ propre à la ligne i de la matrice MT2 permet d'échantillonner dans la ligne i de la matrice MT2 les niveaux de signal utile issus des pixels de la ligne de même rang i de la matrice MT1 adressés par le signal de sélection LSELᵢ.

A la fin de cette séquence, chaque échantillonneur-bloqueur de la matrice MT2 contient, outre un niveau de réinitialisation précédemment stocké, un niveau de signal utile d'un pixel respectif de la matrice MT1. Le niveau de réinitialisation est bien celui qui précède le remplissage du noeud de stockage et non celui qui suit ce remplissage et on peut faire un véritable double échantillonnage corrélé.

La conversion analogique-numérique faite dans le circuit de traitement C_{i,j} de la matrice MT2 fournit une valeur numérique de la différence entre le niveau de signal utile et le niveau de réinitialisation de chaque pixel. Cette conversion est effectuée simultanément pour tous les pixels. Elle se fait pendant la durée d'intégration après le dernier échantillonnage de signal utile SHS_{N} et avant l'émission d'un nouveau signal de réinitialisation globale sur la ligne RST. L'intervalle de temps utilisé pour la conversion analogique-numérique est symbolisé par un créneau CONV sur la figure 3. Si la conversion est faite à l'aide d'un compteur comme on l'expliquera plus loin, le compteur compte à la cadence d'une horloge CLK pendant une durée qui dépend de la valeur à convertir. Le résultat de la conversion est lu à la fin de ce temps.

Le résultat de la conversion est additionné soit à un résultat précédemment stocké dans le même circuit de traitement C_{i,j} de la matrice MT2 soit à un résultat précédemment stocké dans le circuit C_{i-1,j} de même rang j dans la ligne précédente selon le mode de séquencement qui est adopté. On considère ici qu'il s'agit d'un séquencement sans permutation circulaire et c'est le deuxième cas qui s'applique.

Dans le cas où la conversion utilise un compteur pour fournir le résultat de la conversion, on prévoit de préférence que la lecture du contenu du compteur consiste à transférer la sortie du compteur à une entrée d'initialisation du compteur de même rang j de la ligne suivante pour que ce compteur parte d'un contenu initial non nul lors de la prochaine période d'intégration. Un créneau SHIFT_EN après la fin de la conversion numérique symbolise le fait qu'on décale le contenu final d'un compteur vers une entrée d'initialisation du compteur de la ligne suivante. En ce qui concerne la première ligne, son contenu initial est systématiquement mis à zéro.

Toutefois, après la fin de la conversion analogique-numérique CONV et avant d'émettre l'impulsion de transfert de contenu SHIFT_EN, on lit (impulsion de lecture READ_N) le contenu de la dernière ligne de compteurs, qui contient le résultat d'intégration recherchée.

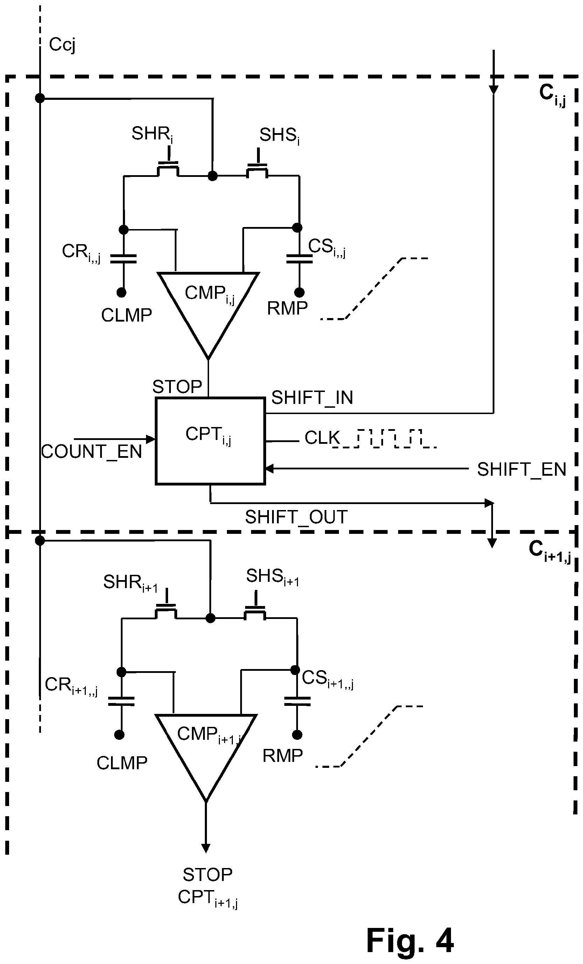

La figure 4 représente le schéma de principe d'un circuit de traitement C_{i,j} de rang j dans la ligne i de la matrice MT2, utilisant un convertisseur analogique-numérique individuel à rampe dans le circuit de traitement lui-même. Le convertisseur utilise un compteur CPT_{i,j}, un comparateur CMP_{i,j}, et une rampe de tension linéaire qui est commune à toute la matrice MT2.

L'échantillonneur-bloqueur de rang i,j comprend dans cet exemple deux capacités de stockage CR_{i,j} et CS_{i,j}, la première pour stocker un niveau de réinitialisation présent sur le conducteur de colonne Ccj au moment du premier signal d'échantillonnage SHRᵢ, la deuxième pour stocker un niveau de signal utile présent sur ce même conducteur au moment du deuxième signal d'échantillonnage SHSᵢ.

La première capacité CR_{i,j} a une borne à un potentiel de référence CLMP. La deuxième capacité CS_{i,j} a une borne reliée à une borne RMP qui reçoit d'un générateur de rampe non représenté une rampe de tension (en principe linéaire) partant du potentiel CLMP. Le compteur CPT_{i,j} compte à une cadence constante fournie par une horloge CLK commune à toute la matrice.

Le compteur commence à compter en même temps que la rampe commence à monter. Un signal de commande COUNT_EN définit le début de la conversion (CONV sur la figure 3) et sert à la fois à déclencher le comptage par le compteur et la montée de la rampe. L'arrêt du compteur est déclenché par un signal STOP issu de la sortie du comparateur. Lorsque le niveau de la rampe est tel que les potentiels sur les deux entrées du comparateur deviennent identiques, le comparateur CMP_{i,j} bascule et interrompt le comptage. Le contenu du compteur au moment de l'arrêt est proportionnel au temps mis par la rampe pour atteindre un certain niveau et ce temps est proportionnel (si la rampe est linéaire) à la différence entre le signal utile stocké dans la capacité CS_{i,j} et le signal de réinitialisation stocké dans la capacité CR_{i,j}. Le potentiel du signal utile est plus négatif que le potentiel de référence CLMP et on utilise une rampe de tension montante. On pourrait mettre une rampe descendante sur le pied de l'autre capacité.

Le compteur comprend une entrée d'horloge (CLK), une entrée de démarrage COUNT_EN, une entrée d'arrêt de comptage (STOP), une entrée SHIFT_IN de réception d'un contenu initial (ce serait une entrée de remise à zéro dans le cas du séquencement avec permutation circulaire), une entrée SHIFT_EN pour autoriser le chargement du contenu initial, et enfin une sortie SHIFT_OUT pour fournir le contenu du compteur au compteur de la ligne suivante. Pour la dernière ligne, la sortie SHlFT_OUT fournit au circuit de sortie CS le résultat de l'accumulation de N vues d'une même ligne d'image. Pour la première ligne, l'entrée SHIFT_IN reçoit une valeur de remise à zéro du compteur car la première ligne doit être remise à zéro avant chaque nouvelle conversion dans le cas d'un séquencement sans permutation circulaire.

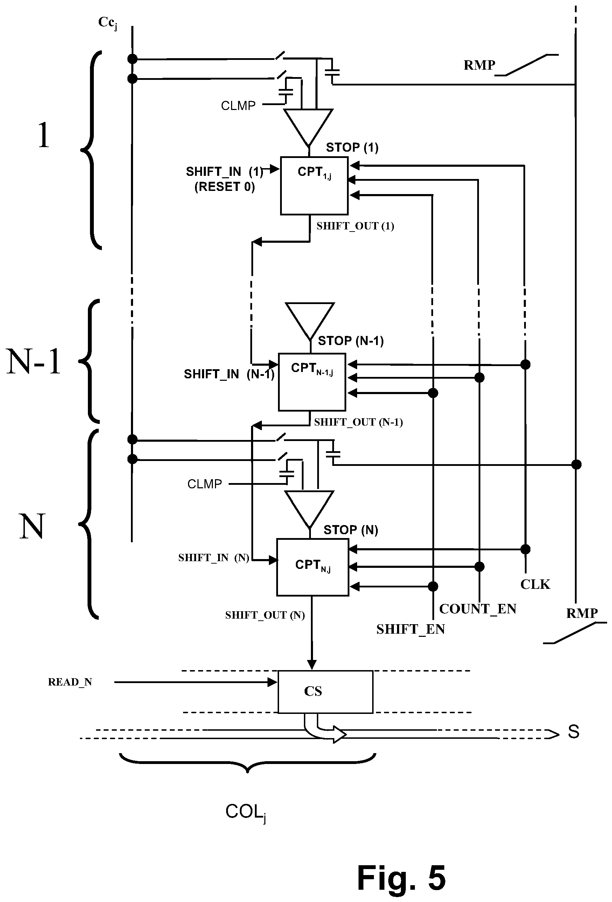

La figure 5 représente l'organisation générale de la matrice MT2 lorsque la conversion analogique-numérique est faite de cette manière.

On notera qu'un intérêt important de ce capteur d'image est qu'il peut être utilisé comme un capteur d'image instantané (ne fonctionnant pas en défilement et intégration de signal) capable de fonctionner à la fois avec un temps d'intégration commun à toutes les lignes de la matrice et un véritable double échantillonnage corrélé. Dans ce cas, on comprend que les moyens de sommation numérique et de permutation n'ont pas besoin d'être présents et on se contente d'extraire de la matrice MT2 la totalité des signaux numérisés à la fin de chaque période d'échantillonnage de durée T, en utilisant le chronogramme de la figure 3 mais en lisant toutes les lignes de la matrice MT2 et non pas seulement la ligne de rang N. Bien entendu, dans ce cas il n'y a pas de permutation d'adressage et la ligne de rang i de la matrice MT1 est systématiquement échantillonnée dans la ligne de même rang de la matrice MT2.

Lorsque le capteur d'image fonctionne en défilement et intégration de charges, on remarque qu'une même ligne d'image est lue et convertie successivement par tous les échantillonneurs-bloqueurs et tous les convertisseurs analogiques-numériques de la matrice MT2, de sorte qu'on moyenne sur N lignes notamment les erreurs d'offset des comparateurs utilisés dans la conversion.

## Revendications

1. Capteur d'image à N lignes de P pixels photosensibles à défilement et intégration de signal, un pixel de rang j dans une ligne étant constitué par un circuit à transistors MOS comportant une entrée de sélection de ligne (SELᵢ) reliée à un conducteur d'adressage en ligne (Lᵢ) commun aux pixels de la ligne et une sortie reliée à un conducteur de colonne (Ccj) de rang j commun aux N pixels de même rang j appartenant aux différentes lignes, chaque pixel comprenant une photodiode (PD), un nœud de stockage de charges (ND), un transistor de transfert (T1) pour permettre le transfert de charges de la photodiode vers le nœud de stockage, un transistor de réinitialisation du potentiel du nœud de stockage (T2), un transistor suiveur (T3) pour engendrer un potentiel représentant la quantité de charges dans le nœud de stockage, et un transistor de sélection de ligne (T4) pour relier le transistor suiveur au conducteur de colonne, le capteur comportant un circuit (DEL1) d'adressage successif de chacune des N lignes de pixels pour appliquer à chaque fois aux P conducteurs de colonne d'une part P potentiels de réinitialisation après une réinitialisation globale de tous les pixels et d'autre part P signaux analogiques correspondant à l'intégration de charges après un transfert de charges global vers le nœud de stockage pour tous les pixels, pendant une même période d'intégration T, dans les P pixels de la ligne adressée, et le capteur comprenant encore des circuits de numérisation de signal qui comportent, en dehors de la matrice de N lignes de P pixels, N lignes de P circuits de traitement (MT2), **caractérisé en ce que** chaque circuit de traitement ***(CT_{i,j})*** de rang i en ligne et de rang j en colonne comprend:
- un échantillonneur respectif pour effectuer un double échantillonnage corrélé des signaux présents sur un conducteur de colonne de rang j et correspondant à l'observation d'un point d'image pendant la même durée d'intégration pour toutes les lignes,
- un moyen de conversion analogique-numérique pour fournir des valeurs numériques représentant des différences entre deux signaux analogiques échantillonnés,
- un moyen d'addition numérique pour additionner un signal converti par le moyen de conversion du circuit de traitement de rang i en ligne et j en colonne et correspondant à une période d'intégration T avec des signaux numériques convertis par les circuits de traitement de rangs précédents en ligne et correspondant à l'observation du même point d'image pendant des périodes d'intégration précédentes, le moyen d'addition numérique d'un circuit de traitement de rang i en ligne et j en colonne étant relié à une sortie d'un circuit de traitement de rang précédent i-1 en ligne pour recevoir le résultat d'une addition numérique effectuée lors d'une intégration précédente et le moyen d'addition numérique étant apte à additionner à ce résultat une valeur numérique résultant d'une conversion analogique-numérique courante faite par le moyen de conversion;
le capteur comportant encore un moyen d'extraction du contenu du moyen d'addition numérique de la dernière ligne à la fin de chaque période d'intégration.

2. Capteur d'image selon la revendication 1, **caractérisé en ce que** l'échantillonneur est agencé pour faire un double échantillonnage corrélé comprenant l'échantillonnage d'un potentiel de réinitialisation d'un nœud de stockage du pixel après réinitialisation et l'échantillonnage d'un niveau de signal utile de ce pixel, correspondant au potentiel du nœud de stockage après déversement de charges dans le nœud de stockage, dans lequel le niveau de réinitialisation correspond à un vidage de charges du nœud de stockage et le niveau de signal utile correspond à un remplissage de charges dans le nœud de stockage postérieurement à ce vidage.

3. Capteur d'image selon la revendication 2, **caractérisé en ce que** le niveau de réinitialisation est défini par une impulsion de réinitialisation (RST) et la durée d'intégration est définie par une impulsion de transfert de charges (GTRA) vers le nœud de stockage, l'impulsion de réinitialisation et l'impulsion de transfert étant communes à tous les pixels des N lignes.

4. Capteur d'image selon l'une des revendications 1 à 3, **caractérisé en ce que** le moyen de conversion analogique-numérique est un convertisseur à rampe comprenant un comparateur (CMP_{i,j}) et un compteur (CPT_{i,j}) dans chaque circuit de traitement ***(CT_{i,j})***, le compteur comptant à une cadence fixe jusqu'au basculement du comparateur lors de l'application d'une rampe de tension linéaire sur une entrée du comparateur, et le moyen d'addition numérique dans le circuit de traitement ***(CT_{i,j})*** de rang de ligne i et de rang de colonne j est une entrée d'initialisation du compteur (CPT_{i,j}) apte à initialiser ledit compteur à une valeur fournie par le circuit de traitement de rang de ligne précédent i-1 et de rang de colonne j.

5. Capteur d'image selon la revendication 4, **caractérisé en ce que** la sortie du compteur du circuit de traitement de rang i-1 en ligne et de rang j en colonne est reliée à une entrée du compteur (CPT_{i,j}) du circuit de traitement de rang i en ligne et j en colonne pour placer dans ce dernier, avant une conversion analogique-numérique correspondant à une période d'intégration, un résultat correspondant à la ligne de rang i-1 et à une période d'intégration précédente.

6. Capteur d'image selon la revendication 5, **caractérisé en ce qu'**il comporte des moyens pour émettre un signal de réinitialisation commun (RST) pour la mise en conduction simultanée de tous les transistors de réinitialisation de la matrice, des moyens pour émettre un signal de transfert commun (GTRA) pour la mise en conduction simultanée de tous les transistors de transfert de la matrice, des moyens pour commander successivement pour chacune des lignes l'échantillonnage d'un potentiel de réinitialisation après une commande de réinitialisation commune et avant une commande de transfert commune, puis pour commander successivement pour chacune des lignes l'échantillonnage d'un potentiel utile après la commande de transfert.

## Patentansprüche

1. Bildsensor mit N Reihen von P fotoempfindlichen Pixeln mit Scrollen und Signalintegration, wobei ein Pixel von Rang j in einer Reihe durch eine MOS-Transistorschaltung gebildet wird, umfassend einen Reihenauswahleingang (SELᵢ), der mit einem den Pixeln der Reihe gemeinsamen Reihenadressierungsleiter (Lᵢ) verbunden ist, und einen Ausgang, der mit einem den N Pixeln desselben Rangs j gemeinsamen Spaltenleiter (Ccj) von Rang j verbunden ist, die zu den unterschiedlichen Reihen gehören, wobei jedes Pixel eine Fotodiode (PD), einen Ladungsspeicherknoten (ND), einen Übertragungstransistor (T1) zum Zulassen der Übertragung von Ladungen der Fotodiode zum Speicherknoten, einen Transistor zum Neuinitialisieren des Potentials des Speicherknotens (T2), einen Nachführungstransistor (T3) zum Erzeugen eines Potentials, das die Ladungsmenge im Speicherknoten repräsentiert, und einen Reihenauswahltransistor (T4) umfasst, um den Nachführungstransistor mit dem Spaltenleiter zu verbinden, wobei der Sensor eine sukzessive Adressierungsschaltung (DEL1) von jeder von N Reihen von Pixeln umfasst, um jedes Mal an die P Spaltenleiter einerseits P Neuinitialisierungspotentiale nach einer globalen Neuinitialisierung aller Pixel und andererseits P analoge Signale entsprechend der Ladungsintegration nach einer globalen Ladungsübertragung zum Speicherknoten für alle Pixel während einer selben Integrationsperiode T in den P Pixeln der adressierten Reihe anzulegen, und wobei der Sensor ferner Signaldigitalisierungsschaltungen umfasst, die außerhalb der Matrix von N Reihen von P Pixeln N Reihen von P Verarbeitungsschaltungen (MT2) umfassen, **dadurch gekennzeichnet, dass** jede Verarbeitungsschaltung (***CT_{i,j}***) von Reihenrang i und Spaltenrang j Folgendes umfasst:
- einen jeweiligen Sampler zum Bewirken einer korrelierten Doppelabtastung von Signalen, die an einem Leiter von Spaltenrang j anliegen, und entsprechend der Beobachtung eines Bildpunktes während derselben Integrationsdauer für alle Reihen,
- ein Analog-Digital-Umwandlungsmittel zum Liefern digitaler Werte, die Differenzen zwischen zwei abgetasteten analogen Signalen repräsentieren,
- ein digitales Additionsmittel zum Addieren eines vom Umwandlungsmittel der Verarbeitungsschaltung von Reihenrang i und Spaltenrang j umgewandelten Signals und entsprechend einer Integrationsperiode T, mit digitalen Signalen, umgewandelt von den Verarbeitungsschaltungen vorheriger Reihenränge und entsprechend der Beobachtung desselben Bildpunktes während vorangegangener Integrationsperioden, wobei das digitale Additionsmittel einer Verarbeitungsschaltung von Reihenrang i und Spaltenrang j mit einem Ausgang einer Verarbeitungsschaltung des vorherigen Reihenrangs i-1 verbunden ist, um davon das Ergebnis einer digitalen Addition zu empfangen, durchgeführt während einer vorherigen Integration, und wobei das digitale Additionsmittel zu diesem Ergebnis einen digitalen Wert addieren kann, der von einer von dem Umwandlungsmittel durchgeführten laufenden Analog-Digital-Umwandlung resultiert;
wobei der Sensor ferner ein Mittel zum Extrahieren des Inhalts des digitalen Additionsmittels von der letzten Reihe am Ende jeder Integrationsperiode umfasst.

2. Bildsensor nach Anspruch 1, **dadurch gekennzeichnet, dass** der Sampler zum Durchführen einer korrelierten Doppelabtastung ausgelegt ist, die das Abtasten eines Neuinitialisierungspotentials eines Speicherknotens des Pixels nach dem Neuinitialisieren und das Abtasten eines Nutzsignalpegels dieses Pixels beinhaltet, entsprechend dem Potential des Speicherknotens nach dem Freisetzen von Ladungen im Speicherknoten, in dem der Neuinitialisierungspegel einem Entladen des Speicherknotens entspricht und der Nutzsignalpegel einem Laden des Speicherknotens nach diesem Entladen entspricht.

3. Bildsensor nach Anspruch 2, **dadurch gekennzeichnet, dass** der Neuinitialisierungspegel durch einen Neuinitialisierungsimpuls (RST) definiert wird und die Integrationsdauer durch einen Ladungsübertragungsimpuls (GTRA) zum Speicherknoten definiert wird, wobei der Neuinitialisierungsimpuls und der Übertragungsimpuls allen Pixeln von N Reihen gemeinsam sind.

4. Bildsensor nach einem der Ansprüche 1 bis 3, **dadurch gekennzeichnet, dass** das Analog-Digital-Umwandlungsmittel ein Rampenwandler ist, der einen Komparator (CMP_{i,j}) und einen Zähler (CPT_{i,j}) in jeder Verarbeitungsschaltung (***CT_{i,j}***) umfasst, wobei der Zähler mit einer festen Rate bis zum Umschalten des Komparators beim Anlegen einer linearen Spannungsrampe an einem Eingang des Komparators zählt und das digitale Additionsmittel in der Verarbeitungsschaltung (***CT_{i,j}***) von Reihenrang i und Spaltenrang j ein Initialisierungseingang des Zählers (CPT_{i,j}) ist, der den Zähler auf einen Wert initialisieren kann, der von der Verarbeitungsschaltung des vorherigen Reihenrangs i-1 und Spaltenrangs j geliefert wird.

5. Bildsensor nach Anspruch 4, **dadurch gekennzeichnet, dass** der Ausgang des Zählers der Verarbeitungsschaltung von Reihenrang i-1 und Spaltenrang j mit einem Eingang des Zählers (CPT_{i,j}) der Verarbeitungsschaltung von Reihenrang i und Spaltenrang j verbunden ist, um darin, vor einer Analog-Digital-Umwandlung entsprechend einer Integrationsperiode, ein Ergebnis entsprechend der Reihenrang i-1 und mit einer vorherigen Integrationsperiode zu platzieren.

6. Bildsensor nach Anspruch 5, **dadurch gekennzeichnet, dass** er Mittel zum Aussenden eines gemeinsamen Neuinitialisierungssignals (RST) zum gleichzeitigen Leitendmachen aller Neuinitialisierungstransistoren der Matrix, Mittel zum Aussenden eines gemeinsamen Übertragungssignals (GTRA) zum gleichzeitigen Leitendmachen aller Übertragungstransistoren der Matrix, Mittel zum sukzessiven Steuern für jede der Abtastreihen eines Neuinitialisierungspotentials nach einem gemeinsamen Neuinitialisierungsbefehl und vor einem gemeinsamen Übertragungsbefehl, dann zum sukzessiven Steuern für jede der Abtastreihen eines Nutzpotentials nach dem Übertragungsbefehl umfasst.

## Claims

1. Image sensor having N lines of P photosensitive pixels with scrolling and signal integration, a pixel of rank j in a line being constituted by a MOS transistor circuit comprising a line selection input (SELᵢ) connected to a row addressing conductor (Lᵢ) common to pixels of the line and an output connected to a column conductor (Ccj) of rank j common to the N pixels of the same rank j belonging to the different lines, each pixel comprising a photodiode (PD), a node of charge storage (ND), a transfer transistor (T1) to enable the charge transfer of the photodiode to the storage node, a transistor for resetting the potential of the storage node (T2), a follower transistor (T3) for generating a potential representing the quantity of charges in the storage node, and a line selection transistor (T4) for connecting the follower transistor to the column conductor, the sensor comprising a successive addressing circuit (DEL1) of each of the N rows of pixels in order to apply, each time, to P column conductors, on the one hand, P potential of resetting after an overall resetting of all the pixels and, on the other hand, P analog signals corresponding to the integration of charges after a global transfer of charges to the storage node for all the pixels, during the same period of integration T, in the P pixels of the line addressed, and the sensor further comprising signal digitization circuits which comprise, apart from the matrix of N lines of P pixels, N lines of P processing circuits (MT2), **characterized in that** each circuit of treatment *(**CT_{i,j}**)* of rank i in line and of rank j in column comprises:
- a respective sampler to perform a double correlated sampling of the signals present on a column conductor of rank j and corresponding to the observation of an image point during the same integration time for all the lines,
- an analog-to-digital converting means for providing digital values representing differences between two analog sampled signals,
- a digital addition means for adding a signal converted by the conversion means of the processing circuit of rank i in row and j in column and corresponding to a period of integration T with digital signals converted by the processing circuits of preceding ranks in line and corresponding to the observation of the same image point during previous integration periods, the digital addition means of a processing circuit of rank i in line and j in column being connected to an output of a processing circuit of preceding rank i-1 in line to receive therefrom the result of a digital addition carried out during a previous integration and the digital addition means being able to add to this result a digital value resulting from a current conversion analog-digital made by the conversion means;
the sensor further comprising a means of extracting the content of the digital addition means of the last line at the end of each integration period.

2. An image sensor according to claim 1, **characterized in that** the sampler is arranged to perform a correlated dual sampling including sampling a resetting potential of a storage node of the pixel after resetting and sampling a useful signal level of that pixel, corresponding to the potential of the storage node after spilling of charges in the storage node, wherein the resetting level corresponds to a load dumping of the storage node and the useful signal level corresponds to a filling of charges in the storage node after this emptying.

3. The image sensor according to claim 2, **characterized in that** the resetting level is defined by a resetting pulse (RST) and the integration time is defined by a load transfer pulse (GTRA) to the storage node, the resetting pulse and the transfer pulse being common to all the pixels of the N lines.

4. Image sensor according to one of claims 1 to 3, **characterized in that** the analog-to-digital converting means is a ramp converter comprising a comparator (CMP_{i,j}) and a counter (CPT_{i,j}) in each processing circuit *(**CT_{i,j}**),* the counter being a fixed rate until the comparator tilts during the application of a linear voltage ramp on an input of the comparator, and the digital addition means in the processing circuit *(**CT_{i,j}**)* of line rank i and column rank j is a counter initialization input (CPT_{i,j}) being able to initialize said counter to a value provided by the processing circuit of precedent row rank i-1 and column rank j.

5. An image sensor according to claim 4, **characterized in that** the output of the counter of the processing circuit rank i-1 in line and rank j in column is connected to an input of the counter (CPT_{i,j}) of the processing circuit of rank i in line and j in column to place in the latter, before an analog-to-digital conversion corresponding to an integration period, a result corresponding to the line of rank i-1 and to a previous integration period.

6. An image sensor according to claim 5, **characterized in that** it comprises means for emitting a common resetting signal (RST) for simultaneously turning on all the matrix resetting transistors, means for emitting a common transfer signal (GTRA) for simultaneously turning on all matrix transfer transistors, means for successively controlling for each of the sampling lines of a resetting potential after a common resetting command and before a common transfer command, and then successively controlling for each one of the sampling lines of a useful potential after the transfer command.
